# EUROPEAN PATENT APPLICATION

(11) **EP 2 096 420 A1**
(43) Date of publication of application: **02.09.2009**
(21) Application number: 08425129.7
(22) Date of filing: 29.02.2008
(51) Int. Cl.: G01F 23/02

(54) **Level indicator device, particularly for fluids under high pressure**

(71) Applicant: Cesare Bonetti S.P.A., 20024 Garbagnate Milanese (IT)
(72) Inventor: Zona, Mauro, 10153 Torino (IT)
(74) Representative: Notaro, Giancarlo

(57) **Abstract**

A level-indicator device, particularly for fluids under high pressure, includes: an elongated chamber (6), designed to be set in communication with the fluid of which it is desired to detect the level, two transparent optical elements (1, 2), of an elongated shape, facing one another and set at a distance from one another, which define two opposite faces of said chamber (6), and a first supporting body (8) and a second supporting body (9), connected to one another by means of screws (10), with said transparent optical elements (1, 2) set between them. No rigid body is set between the two aforesaid optical elements, but rather only elastic means tending to hold the optical elements (1, 2) against respective supporting surfaces of the first and second supporting bodies (8, 9). In this way, the mutual tightening of the first and second supporting bodies (8, 9) does not cause application of any force on said optical elements (1, 2). The two optical elements (1, 2) are received within seats of the supporting bodies (8, 9) with the interposition of half-shells (16, 17). Said half-shells (16, 17) can be made of metal material, whilst the supporting bodies (8, 9) can be made of synthetic material.

## Description

The present invention relates to level-indicator devices, particularly for fluids under high pressure, of the type including:
- an elongated chamber, designed to be set in communication with the fluid of which it is desired to detect the level;
- two transparent optical elements of elongated shape, which are set facing one another and at a distance from one another and define two opposite faces of said chamber; and
- a first supporting body and a second supporting body, connected to one another by means of screws, with said transparent optical elements set between them, so that a relative recession of said transparent optical elements as a result of the pressure of the fluid in the aforesaid chamber is hindered.

Level-indicator devices of the type referred to above are normally used in a wide range of applications, where the fluid is at a pressure higher than 200 atm and can reach pressures of up to 400 atm or more, and where moreover the temperature of the fluid can reach values even in the region of 300°C. Level indicators of this type are, for example, used in boilers for residential or industrial purposes or in petrochemical installations.

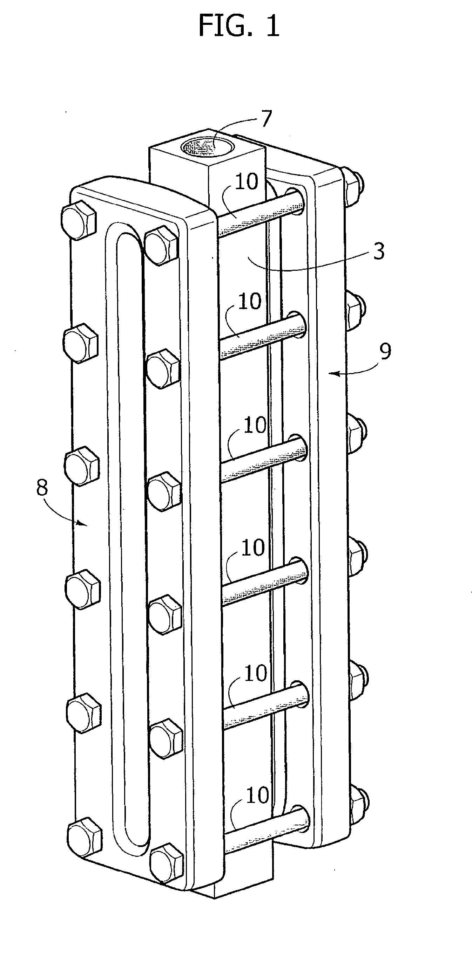

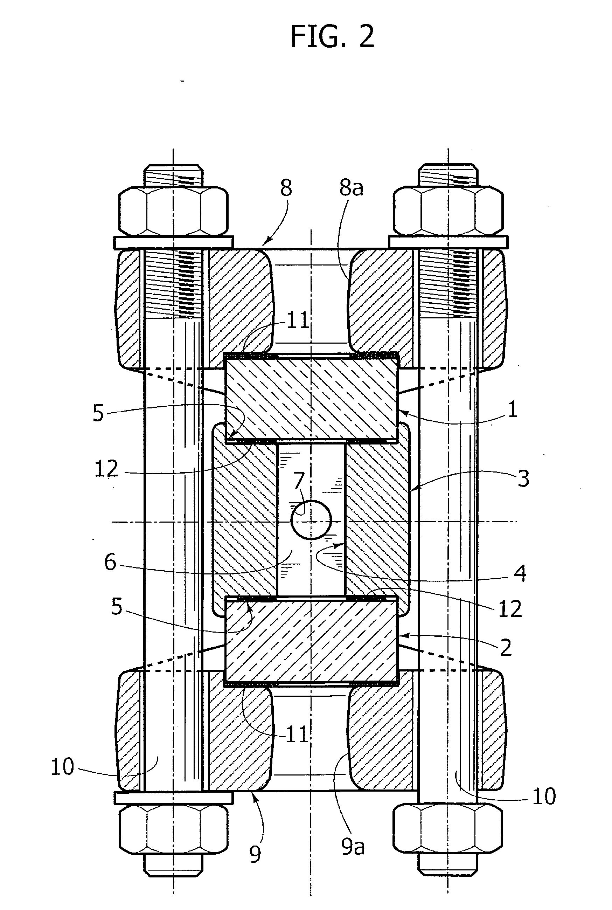

Figures 1 and 2 of the annexed drawings illustrate schematically a perspective view and a cross-sectional view of a level-indicator device according to traditional techniques. The reference numbers 1 and 2 in Figure 2 designate two transparent optical prisms, of elongated shape, set between which is a rigid metal body 3, in the form of a bar with square cross section, typically made of stainless steel. The bar 3, for a prevalent part of its length, is traversed by a longitudinal slit 4, the opposite ends of which terminate at a short distance from the end of the bar 3. The slit 4 gives out onto two opposite faces of the bar 3, where seats 5 are formed for the optical prisms 1, 2. Consequently, the two prisms 1, 2, together with the walls of the slit 4, define an elongated chamber 6, designed to be set in communication with the fluid of which it is desired to detect the level via axial holes 7 made in the ends of the bar 3. The reference numbers 8, 9 designate a first metal body and a second metal body, resembling plates, which are secured to one another by means of long bolts 10 so as to press the two optical prisms 1, 2 against the two opposite faces of the rigid central body 3 so as to prevent the pressure of the fluid within the chamber 6 from possibly moving the prisms 1, 2 away from one another. The supporting bodies 8, 9 have elongated windows 8a, 9a to enable vision through the prisms 1, 2 and the chamber 6. Set between the prisms 1, 2 and the supporting bodies 8, 9 are gaskets 11 (to prevent direct contact between metal and glass during tightening, which would involve the risk of splintering the glass and consequently rendering it unusable), whilst set between the rigid central body 3 and the prisms 1, 2 are gaskets 12. The gaskets 11, 12 have an elongated conformation, with a longitudinal central opening corresponding to the slit 4 so as not to obstruct vision through the prisms 1, 2 and the chamber 6.

One of the main drawbacks of the level indicators of the traditional type illustrated above lies in the high cost of the optical prisms 1, 2. Said cost derives from the need to guarantee that said elements will not be subject to cracking or breakage when they are pressed against the rigid central body 3 as a result of tightening of the bolts 10. It is in particular necessary, for preventing anomalous stresses on said elements, that they should undergo precise machining so as to present their two opposite faces, one in contact with the central body 3 and the other in contact with the respective supporting bodies 8 or 9, which will be rigorously parallel to one another, with a very restricted margin of tolerance. On the other hand, the tightening torque of the bolts 10 must be relatively high to compensate for the effect of the pressure of the fluid during operation, which tends to move the two optical prisms 1, 2 away from one another, reducing the load above the gaskets 12. Said situation also results in a relative laboriousness of the operations of assembly of the device, it being necessary to make sure that the prisms 1, 2 are positioned properly and are subjected to the desired load as a result of tightening of the bolts 10.

The object of the present invention is to propose a new structure of level-indicator device, which will enable a considerable reduction in the complexity and cost of the operations of fabrication and assembly of the device.

With a view to achieving said object, the subject of the invention is a level-indicator device having the characteristics referred to at the start of the present description and moreover characterized in that:
- it is said first and second supporting bodies that define, together with said optical elements, the aforesaid chamber of the level-indicator device; and
- between the two aforesaid optical elements no rigid body is set;
so that the mutual gripping of said first and second supporting bodies does not cause application of any force on said optical elements.

Thanks to the aforesaid characteristics, no precise parallelism of the opposed faces of each optical element is required, nor is it necessary for said elements to be positioned with absolute precision. In fact, in the device according to the invention, when the first and second supporting bodies are secured to one another, they do not compress the optical elements against any rigid central body. As compared to the conventional solution, said rigid central body is completely eliminated.

According to a further preferred characteristic of the invention, set between the two aforesaid optical elements are only elastic means tending to hold said optical elements against respective supporting surfaces of said first and second supporting bodies. Said elastic means do not need to have a particularly high load since it is the fluid itself, which during operation, with its own pressure, actually presses the optical elements against the respective supporting surfaces on said first and second supporting bodies. The latter are simply secured one against the other, and it is these, given that the rigid central body is eliminated, that define the chamber of the device on two opposite sides thereof, the other two sides being defined by the optical elements themselves. Production of the optical elements can thus be considerably less expensive, given that precision machining of their surfaces is not required, and no laborious and costly assembly operations are involved. Furthermore, also the reliability of the device is improved since there are no longer the critical areas of sealing that the traditional solution presents at the surface of contact of the optical elements with the rigid internal body. Also the operations of assembly of the device are much simpler and faster since there is no risk of stressing the optical elements in an anomalous way at the moment of tightening of the two supporting bodies to one another. Finally, since said supporting bodies are directly in contact with one another, the overall dimensions of the device are very small, as likewise much shorter is the length of the bolts used for gripping the two supporting bodies together.

According to a further characteristic of a preferred embodiment, the first and second supporting bodies have respective seats that receive the optical elements with the interposition of two respective half-shells that are juxtaposed with respect to one another so that said half-shells define the surface of said chamber completely. In many applications, the specifications require that the fluid should come into contact only with metal material, in particular stainless steel. In the case of the aforesaid embodiment, it is possible to make of steel only the two aforesaid half-shells that define the walls of the chamber for the fluid, whilst said first and second supporting bodies can be made of synthetic material so as to reduce considerably the weight and cost of the device.

A further characteristic of the preferred embodiment of the invention lies in the fact that at least at one end the aforesaid device has an outlet tube communicating with said chamber, set in a direction transverse to the longitudinal direction of the device and converging in an external connector, mounted oscillating about the axis of said transverse tube. In the specific case of the preferred example, said outlet tube projects on the outside of the device and has a passage in communication with a channel made within a radial arm mounted oscillating on the external portion of said outlet tube. Said radial arm can be connected to a final outlet connector, or else can constitute a connector for connection to the chamber of another device.

Thanks to said characteristic, which is preferably envisaged at both ends of the device, the distance between the two inlet and outlet connectors of the device, as likewise the relative arrangement of a number of devices connected together, can be varied as desired so as to be readily adaptable to the characteristics of the plant on which the device is to be installed.

The level indicator described above is of the "optical transmission" type, with two optical elements, where the reading of the level is performed by means of optical observation through both of the optical elements and through the chamber where the fluid is present. The principles of the invention are, however, applicable also to a level indicator of the "optical reflection" type, with a single optical element, according to what is specified in the annexed Claim 10.

Further characteristics and advantages of the invention will emerge from the ensuing description, with reference to the annexed drawings, which are provided purely by way of non-limiting examples and in which:
- Figure 1 is a perspective view of a traditional level-indicator device;
- Figure 2 is a cross-sectional view of the device illustrated in Figure 1;
- Figure 3 is a schematic cross-sectional view of the device according to the invention;
- Figure 4 is a perspective view of a preferred embodiment of the device according to the invention;
- Figures 5 and 6 are, respectively, a longitudinal sectional view and a transverse sectional view of the device illustrated in Figure 4;
- Figure 7 is a perspective view of the device illustrated in Figure 4;
- Figure 8 is a perspective view of the device according to the invention, completed with two orientable end connectors;
- Figures 9 and 10 are two further perspective views that illustrate two different possible orientations of the connectors of the device illustrated in Figure 8;
- Figure 11 is a cross-sectional view of a detail of the device illustrated in Figure 8; and
- Figure 12 is a perspective view that illustrates another example of embodiment including a pair of level-indicator devices connected to one another.

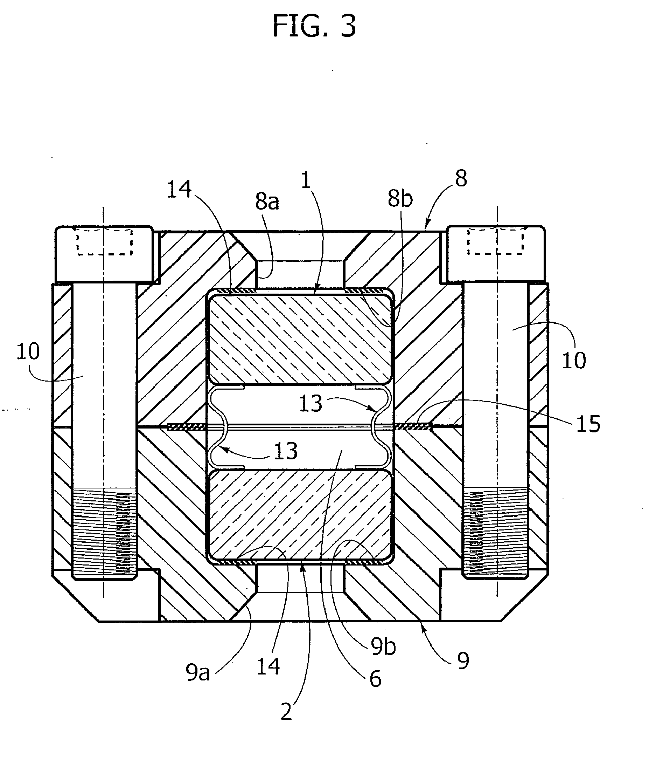

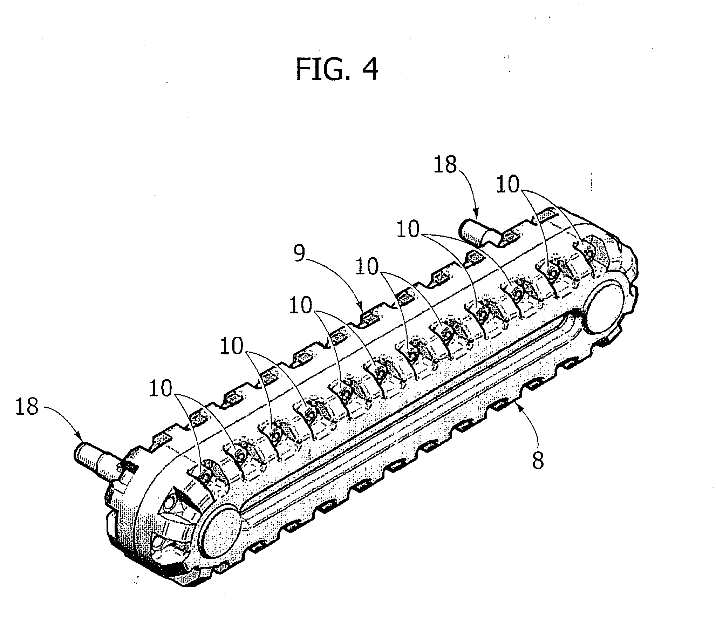

The traditional device illustrated in Figures 1 and 2 has already been illustrated above. Figure 3 is a schematic cross-sectional view of the device according to the invention. As may be immediately appreciated from a comparison with Figure 2, the main difference of the device according to the invention with respect to the traditional device lies in the fact that the central body 3 (visible in Figure 2) has been completely eliminated, and set between the two optical elements 1, 2 are only elastic means 13, which, in the schematic representation of Figure 3, are constituted by two elongated metal laminas having a substantially M-shaped cross section, with two end wings set parallel to one another in contact with the facing surfaces of the two optical elements 1, 2, and an undulated central part. Said central part of the cross section of each elastic lamina undergoes flexural deformation as a result of the assemblage, so that each of the two springs 13 tends to hold the optical elements 1, 2 at a distance from one another, against respective supporting surfaces 8b, 9b of the two supporting bodies 8, 9. Another fundamental difference with respect to the traditional solution illustrated in Figure 2 lies in the fact that the two supporting bodies 8, 9 are secured to one another by means of the bolts 10 directly with their facing surfaces in contact with one another, without said bodies 8, 9 exerting any force against the optical elements 1, 2 since, between the latter, no rigid body is set. In the preferred embodiment (Figure 4), two aligned sets of screws 10 are provided, each screw having a head resting against a respective supporting surface of the supporting body 8 and a threaded stem screwed within a threaded portion of a corresponding hole made in the supporting body 9.

At the moment of tightening of the bolts 10, the two supporting bodies 8, 9 are pressed against one another without any force being exerted on the optical elements 1, 2, since no rigid element is envisaged, set between the optical elements. Consequently, it is not necessary to pay particular attention to an exact parallelism of the two opposite faces of each optical element for the purpose of guaranteeing that it will be stressed in a non-anomalous way. During operation, it is the very pressure of the fluid that guarantees the seal in the area corresponding to the resting of the optical elements against the seats 8b, 9b of the two supporting bodies 8, 9. Gaskets 14 are interposed between said seats 8b, 9b and the two optical elements 1, 2. A further gasket 15 is set between the two supporting bodies 8, 9 in the area surrounding the chamber 6. Tightening of the screws 10 must be sufficient for guaranteeing the seal between the two supporting bodies 8, 9 in an area corresponding to the gasket 15. Since the two supporting bodies 8, 9 are tightened against one another, the overall dimensions of the device are decidedly small as compared to the case of the traditional device illustrated in Figure 2, where the bolts 10 have a much greater length.

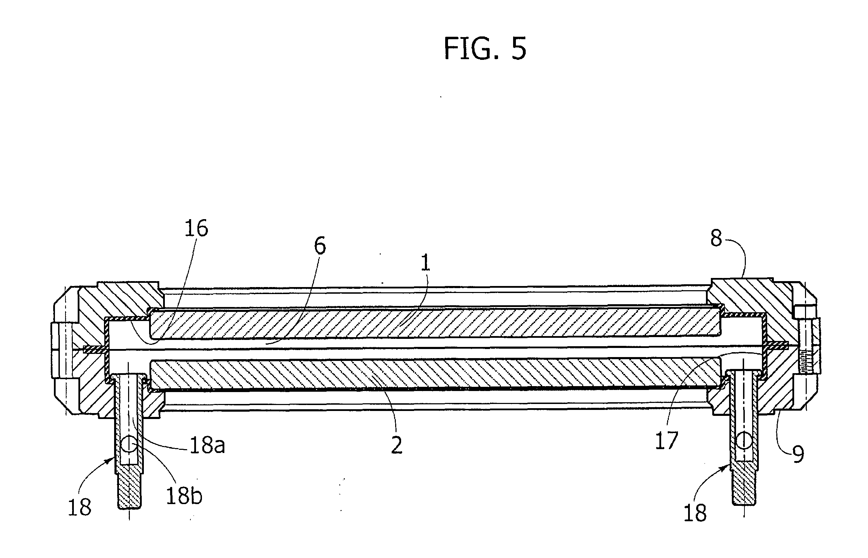

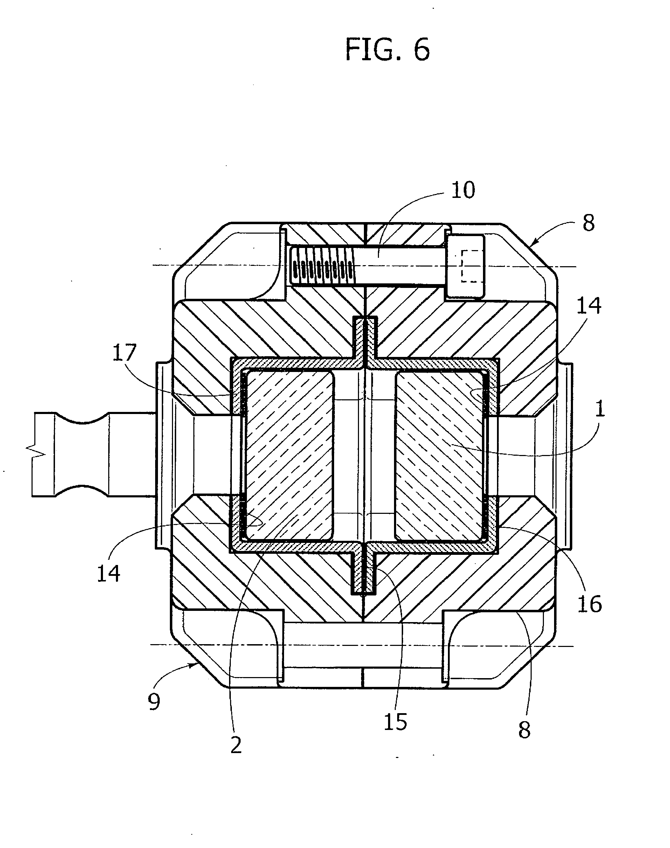

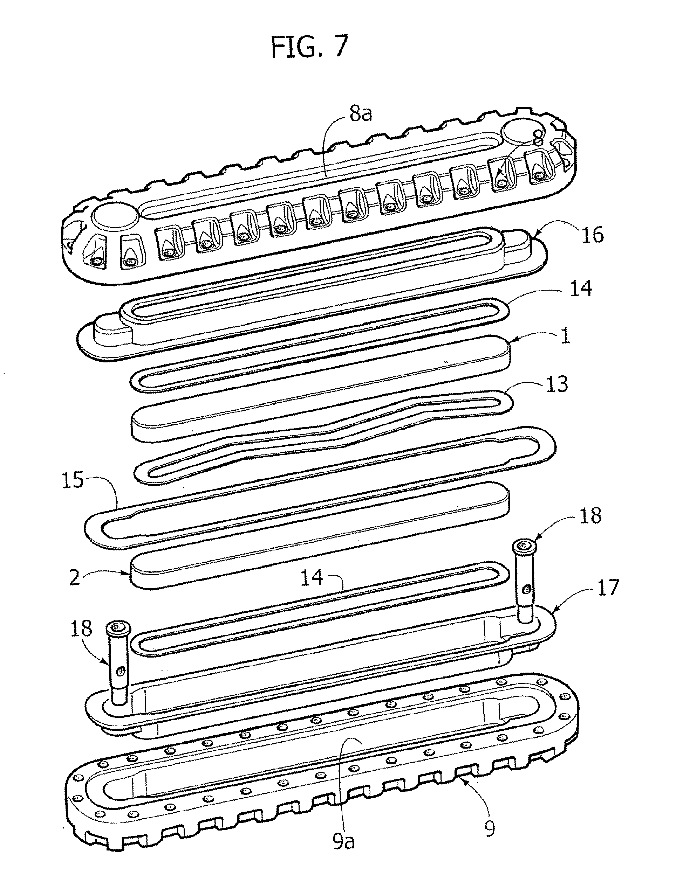

Figures 4-7 illustrate a preferred embodiment of the device according to the invention. With reference in particular to Figures 5 and 7, the supporting bodies 8, 9 have respective seats 8b, 9b that receive the optical elements 1, 2 with interposition of two respective half-shells 16, 17 that have peripheral flanges juxtaposed with respect to one another so that the half-shells 16, 17 define completely the surface of the inner chamber 6 of the device. Set between the optical elements 1, 2 are elastic means 13 (illustrated only in Figure 7), which, in the case of the example illustrated, are constituted by an elongated and undulated annular metal element, the undulations being in contact with the two crystals 1, 2 so as to tend to keep them in the respective seats.

As already specified above, at least in some applications it is required that the fluid of which it is necessary to detect the level should come into contact only with parts made of metal, typically stainless steel. In the case of the embodiment illustrated herein, the thin half-shells 16, 17 can be made of metal material, for guaranteeing satisfaction of said condition, whilst the two supporting bodies 8, 9 can be made of synthetic material so as to enable a considerable reduction of the weight and of the cost of the device.

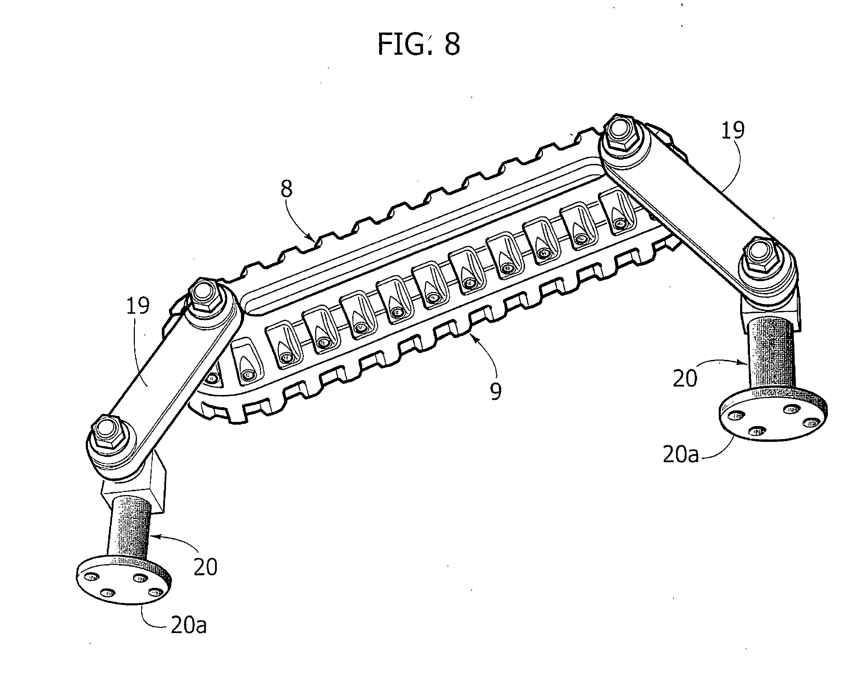

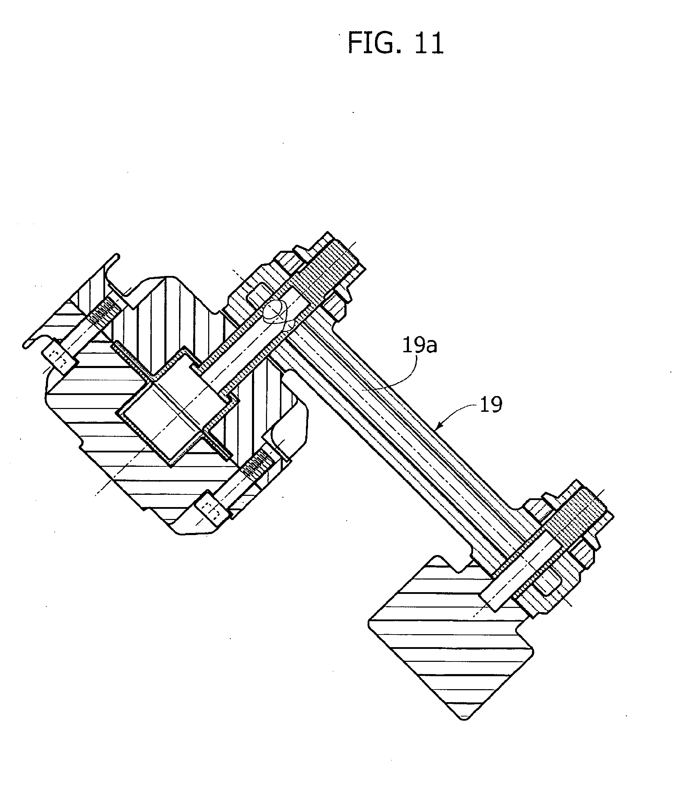

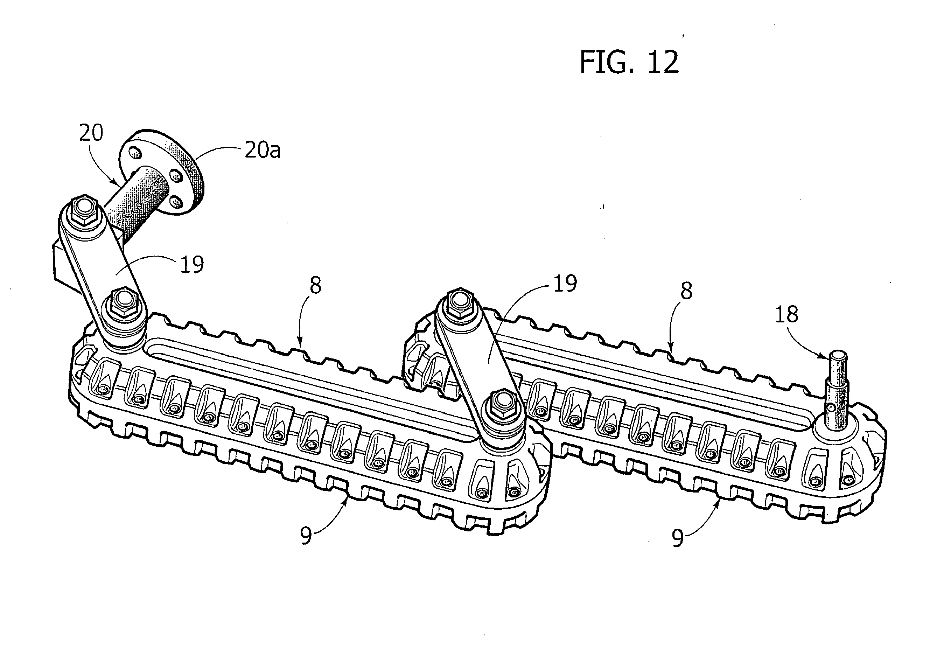

Once again with reference to Figures 4-7, at its opposite ends the device has two outlet tubes 18, inserted through mating holes of the supporting body 9 and of the half-shell 17 and having portions projecting on the outside of the device. Each tube 18 has an axial blind hole 18a communicating with a radial opening 18b. As may be seen in Figure 11, the radial opening 18b is usable for setting the passage 18a in communication with an internal channel 19d of a radial arm 19 mounted oscillating above the portion of the tube 18 that projects on the outside of the device so as to be orientable about the axis of the tube 18. The end of the channel 19a opposite to the one connected to the tube 18 can in turn be connected to the internal passage of a terminal connector 20 (Figure 8) provided with a flange 20a for fixing to the system, on which the device is to be installed, or yet again to the tube 18 of a further device according to the invention, for providing connection between two devices (Figure 12) in a position partially superposed in the longitudinal direction so as to enable a continuity of reading of the level of the fluid for a length greater than the length of the single "module" constituted by just one device.

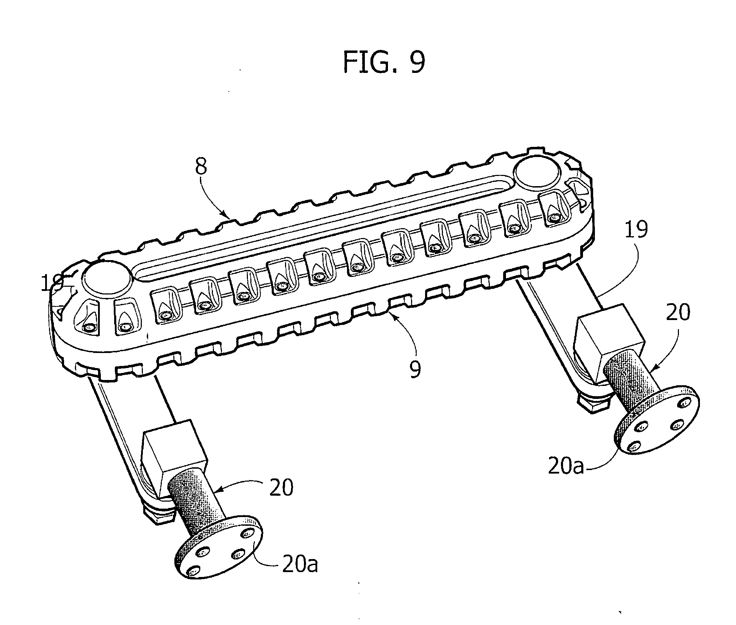

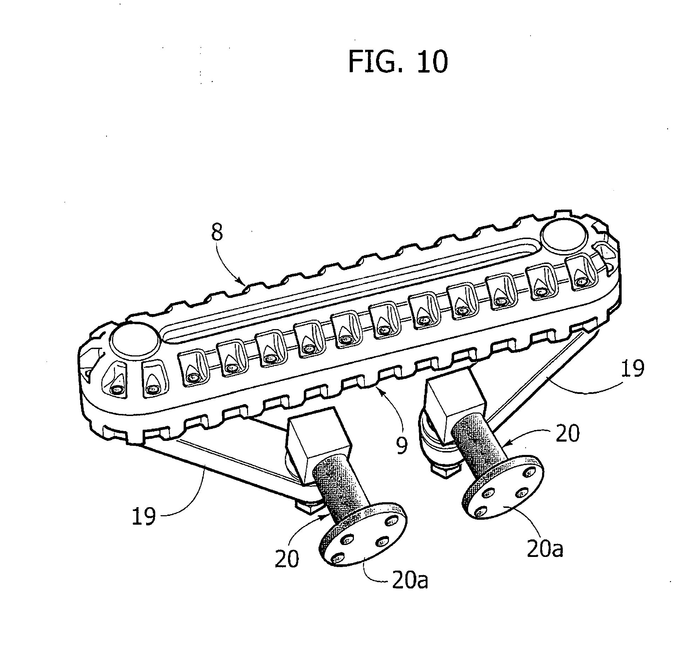

Figures 8-10 show that thanks to the arrangement described above the device according to the invention may be adapted to different installations by varying the distance between the flanges 20a of the terminal connections 20 carried by the oscillating arms 19.

Of course, without prejudice to the underlying principle of the invention, the details of construction and the embodiments may vary widely with respect to what is described and illustrated herein purely by way of example, without thereby departing from the scope of the present invention.

## Claims

1. A level-indicator device, particularly for fluids under high pressure, of the type with optical transmission, including:
- an elongated chamber (6), designed to be set in communication with the fluid of which it is desired to detect the level;
- two transparent optical elements (1, 2) of and elongated shape, which are set facing one another and at a distance from one another and define two opposite faces of said chamber (6); and
- a first supporting body (8) and a second supporting body (9), connected to one another by means of screws (10), with said transparent optical elements (1, 2) set between them, so that a relative recession of said transparent optical elements (1, 2) as a result of the pressure of the fluid in the aforesaid chamber (6) is hindered,
said device being **characterized in that:**
- it is said first and second supporting bodies (8, 9) that define, together with said optical elements (1, 2), the aforesaid chamber (6) of the level-indicator device; and
- between the two aforesaid optical elements (1, 2) no rigid body is set,
so that the mutual gripping of said first and second supporting bodies (8, 9) does not cause application of any force on said optical elements (1, 2).

2. The level-indicator device according to Claim 1, **characterized in that** set between the two aforesaid optical elements (1, 2) are elastic means (13) tending to hold said optical elements (1, 2) against respective supporting surfaces (8b, 9b) of said first and second supporting bodies (8, 9).

3. The level-indicator device according to Claim 1, **characterized in that** the first and second supporting bodies (8, 9) have respective seats (8b, 9b) that receive the optical elements (1, 2) with the interposition of two respective half-shells (16, 17) that are juxtaposed with respect to one another, so that said half-shells (16, 17) define completely the surface of said chamber (6).

4. The level-indicator device according to Claim 3, **characterized in that** said half-shells (16, 17) are made of metal material.

5. The level-indicator device according to Claim 4, **characterized in that** said first supporting body (8) and/or said second supporting body (9) are made of synthetic material.

6. The level-indicator device according to Claim 1 or Claim 3, **characterized in that** at least at one end the aforesaid device has an outlet tube (18) communicating with said chamber (6), set in a direction transverse to the longitudinal direction of the device and converging in an external connector (19), mounted oscillating about the axis of said transverse tube (18).

7. The level-indicator device according to Claim 6, **characterized in that** said outlet tube (18) projects on the outside of the device and has a passage (18a) in communication with a channel (19a) made within a radial arm (19), mounted oscillating on the external portion of said outlet tube.

8. The level-indicator device according to Claim 7, **characterized in that** said radial arm (19) has its channel (19a) in communication with a terminal connector (20).

9. The level-indicator device according to Claim 7, **characterized in that** said radial arm (19) has its channel (19a) in communication with the outlet tube (18) of a further level-indicator device.

10. A level-indicator device, particularly for fluids under high pressure, of the optical-reflection type, including:
- an elongated chamber, designed to be set in communication with the fluid of which it is desired to detect the level;
- a transparent optical element, of an elongated shape, which defines a face of said chamber; and
- a first supporting body and a second supporting body set between which is said transparent optical element,
said device being **characterized in that:**
said optical element is in contact with the first supporting body, whilst it is set at a distance from the second supporting body, without any rigid body being set between said optical element and said second supporting body,
so that the mutual connection of said first and second supporting bodies does not cause application of forces on said optical element.

11. The level-indicator device according to Claim 10, **characterized in that** set between said optical element and said second supporting body are only elastic means tending to hold said optical element against said first supporting body.

## Amended claims

### Amended claims in accordance with Rule 137(2) EPC.

**1.** A level-indicator device, particularly for fluids under high pressure, of the type with optical transmission, including:
- an elongated chamber (6), designed to be set in communication with the fluid of which it is desired to detect the level;
- two transparent optical elements (1, 2) of and elongated shape, which are set facing one another and at a distance from one another and define two opposite faces of said chamber (6); and
- a first supporting body (8) and a second supporting body (9), connected to one another by means of screws (10), with said transparent optical elements (1, 2) set between them, so that a relative recession of said transparent optical elements (1, 2) as a result of the pressure of the fluid in the aforesaid chamber (6) is hindered,
wherein:
- it is said first and second supporting bodies (8, 9) that define, together with said optical elements (1, 2), the aforesaid chamber (6) of the level-indicator device; and
- between the two aforesaid optical elements (1, 2) no rigid body is set,
so that the mutual gripping of said first and second supporting bodies (8, 9) does not cause application of any force on said optical elements (1, 2)
**characterized in that** the first and second supporting bodies (8, 9) have respective seats (8b, 9b) that receive the optical elements (1, 2) with the interposition of two respective half-shells (16, 17) that are juxtaposed with respect to one another, so that said half-shells (16, 17) define completely the surface of said chamber (6).

**2.** The level-indicator device according to Claim 1, **characterized in that** set between the two aforesaid optical elements (1, 2) are elastic means (13) tending to hold said optical elements (1, 2) against respective supporting surfaces (8b, 9b) of said first and second supporting bodies (8, 9).

**3.** The level-indicator device according to Claim 1, **characterized in that** said half-shells (16, 17) are made of metal material.

**4.** The level-indicator device according to Claim 3, **characterized in that** said first supporting body (8) and/or said second supporting body (9) are made of synthetic material.

**5.** The level-indicator device according to Claim 1, **characterized in that** at least at one end the aforesaid device has an outlet tube (18) communicating with said chamber (6), set in a direction transverse to the longitudinal direction of the device and converging in an external connector (19), mounted oscillating about the axis of said transverse tube (18).

**6.** The level-indicator device according to Claim 6, **characterized in that** said outlet tube (18) projects on the outside of the device and has a passage (18a) in communication with a channel (19a) made within a radial arm (19), mounted oscillating on the external portion of said outlet tube.

**7.** The level-indicator device according to Claim 7, **characterized in that** said radial arm (19) has its channel (19a) in communication with a terminal connector (20).

**8.** The level-indicator device according to Claim 7, **characterized in that** said radial arm (19) has its channel (19a) in communication with the outlet tube (18) of a further level-indicator device.
